# EUROPEAN PATENT APPLICATION

(11) **EP 4 779 543 A1**
(43) Date of publication of application: **22.07.2026**
(21) Application number: 25203600.9
(22) Date of filing: 22.09.2025
(51) Int. Cl.: G06Q 10/087, G06F 40/20, G06N 3/02, G06N 20/00

(54) **METHOD AND SYSTEM FOR PURCHASE ORDER CATEGORIZATION USING ENSEMBLE ALGORITHM**

(30) Priority: 21.01.2025 IN 202521004709
(71) Applicant: Tata Consultancy Services Limited, Maharashtra (IN)
(72) Inventor: VARHADPANDE, Sarang Padmanabh, 411057 Pune, Maharashtra (IN); PUNJABI, Pushpam Dharmesh, 411057 Pune, Maharashtra (IN); RAVAT, Ammar Zoher, 400607 Thane West, Maharashtra (IN); CHAUGULE, Anish Dilip, 411057 Pune, Maharashtra (IN); SHAIKH, Irshad Ibrahim, 411006 Pune, Maharashtra (IN)
(74) Representative: Goddar, Heinz J.

(57) **Abstract**

A purchase order is a commercial document issued by a buyer. Conventional methods fails to categorize the purchase orders accurately by using item description alone. The present disclosure receives purchase orders associated with an organization and normalizes by expanding a plurality of acronyms using a large language model. A first category pertaining to normalized purchase orders is determined. A second category of normalized item descriptions are further obtained by selecting a local guided categorizer or a global guided categorizer based on the categorizer selection flag. Further, a final category is obtained based on the first category and the second category and a dynamic threshold value. Finally, the plurality of item descriptions of the plurality purchase orders are grouped based on an associated final category and vector embeddings using a grouping technique. The grouped plurality of item descriptions are updated in training dataset pertaining to a local categorizer.

## Description

### CROSS-REFERENCE TO RELATED APPLICATIONS AND PRIORITY

The present application claims priority from Indian application no. 202521004709, filed on January 21, 2025.

### TECHNICAL FIELD

The disclosure herein generally relates to the field of machine learning and, more particularly, to a method and system for purchase order categorization using ensemble algorithm.

### BACKGROUND

A purchase order is a commercial document issued by a buyer to a seller, indicating types, quantities, and agreed prices for products or services required. It is used to control the purchasing of products and services from external suppliers. Purchase order categorization plays a key role in commerce and inadequate categorization depth hampers spend visibility and identification of spend optimization opportunities like spend consolidation, tail spend management, material standardization and the like.

Further, manual categorization of high volume of spend transactions is time-consuming, costly, and prone to accuracy issues, especially when trying to meet tight timelines. Some of the common problems encountered in manual categorizations are, (i) limited to skills and competence of the procurement practitioner(s) (ii) tagging unclear/ uncertain materials to miscellaneous category (iii) having the same items classified in different taxonomies (iv) limiting categorization due to outdated list of rules (supplier names & keywords) to efficiently classify spend (v) unable to build the complete multiple levels as per taxonomy (normally 4-6 levels) (vi) building redundant/un-used taxonomies and (vii) taxonomies with skewed granularity.

Conventional technology-based methods for purchase order categorization considers very few information from purchase orders. For example, the conventional approaches for categorization consider only material/item description. Further, the conventional methods utilize fixed taxonomy for categorization like United Nations Standard Products and Services Code^{®} (UNSPSC^{®}) and old Natural Language processing techniques. Furthermore, the current technology just uses fixed algorithms and doesn't use global and local models for finer categorization. Hence there is a challenge in categorizing the purchase orders accurately using item description alone.

### SUMMARY

Embodiments of the present disclosure present technological improvements as solutions to one or more of the above-mentioned technical problems recognized by the inventors in conventional systems. For example, in one embodiment, a method for purchase order categorization using ensemble algorithm is provided. The method includes receiving, by one or more hardware processors, a plurality of purchase orders associated with an organization, wherein each of the plurality of purchase order comprises a plurality of item descriptions, item quantity, unit of measurement, item amount, purchase order plant name and purchase order vendor name. Further, the method includes generating, by the one or more hardware processors, a filtered purchase order detail for each of the plurality of purchase orders associated with the organization by performing (i) conditional filtering and (ii) cleaning, wherein cleaning comprises datatype conversion, removing null values and filling missing values. Furthermore, the method includes normalizing, by theone or more hardware processors, each of the plurality of item descriptions associated with each of a plurality of filtered purchase order details by expanding a plurality of acronyms based on a predefined acronym dictionary using a large language model. Furthermore, the method includes generating, by the one or more hardware processors, a first category pertaining to a target taxonomy associated with each of the normalized plurality of item descriptions pertaining to each of the plurality purchase orders by: (i) computing a vector embedding for each of the normalized plurality of item descriptions pertaining to each of the plurality purchase orders using a hidden layer of a pre-trained and fine-tuned Language Model and (ii) comparing each of a computed plurality of vector embedding with a plurality of predefined multi-level categories pertaining to the target taxonomy embeddings based on associated cosine similarity score to identify the first category pertaining to the target taxonomy, wherein a category associated with each of the computed plurality of vector embedding with highest cosine similarity score from among a plurality of categories is selected as the first category pertaining to the target taxonomy. Furthermore, the method includes determining, by the one or more hardware processors, a categorizer selection flag for the plurality of purchase orders using a dynamic categorizer selection technique. Furthermore, the method includes determining, by the one or more hardware processors, a second category pertaining to the target taxonomy associated with each of the plurality of normalized item descriptions pertaining to each of the plurality purchase orders by selecting one of, i) a local guided categorizer and ii) a global guided categorizer based on the categorizer selection flag. Furthermore, the method includes determining, by the one or more hardware processors, a final category associated with the target taxonomy for each of the plurality of item descriptions pertaining to each of the plurality purchase orders based on a comparison between the first category and the second category and a dynamic threshold value using a final guided categorizer model. Finally, the method includes grouping, by the one or more hardware processors, the plurality of item descriptions pertaining to each of the plurality purchase orders based on an associated final category and the computed plurality of vector embeddings using a grouping technique, wherein the grouped plurality of item descriptions pertaining to each of the plurality purchase orders are updated in a training dataset pertaining to the local guided categorizer.

In another aspect, a system for purchase order categorization using ensemble algorithm is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a plurality of purchase orders associated with an organization, wherein each of the plurality of purchase order comprises a plurality of item descriptions, item quantity, unit of measurement, item amount, purchase order plant name and purchase order vendor name. Further, the one or more hardware processors are configured by the programmed instructions to generate a filtered purchase order detail for each of the plurality of purchase orders associated with the organization by performing (i) conditional filtering and (ii) cleaning, wherein cleaning comprises datatype conversion, removing null values and filling missing values. Furthermore, the one or more hardware processors are configured by the programmed instructions to normalize each of the plurality of item descriptions associated with each of a plurality of filtered purchase order details by expanding a plurality of acronyms based on a predefined acronym dictionary using a large language model. Furthermore, the one or more hardware processors are configured by the programmed instructions to generate a first category pertaining to a target taxonomy associated with each of the normalized plurality of item descriptions pertaining to each of the plurality purchase orders by: (i) computing a vector embedding for each of the normalized plurality of item descriptions pertaining to each of the plurality purchase orders using a hidden layer of a pre-trained and fine-tuned Language Model and (ii) comparing each of a computed plurality of vector embedding with a plurality of predefined multi-level categories pertaining to the target taxonomy embeddings based on associated cosine similarity score to identify the first category pertaining to the target taxonomy, wherein a category associated with each of the computed plurality of vector embedding with highest cosine similarity score from among a plurality of categories is selected as the first category pertaining to the target taxonomy. Furthermore, the one or more hardware processors are configured by the programmed instructions to determine a categorizer selection flag for the plurality of purchase orders using a dynamic categorizer selection technique. Furthermore, the one or more hardware processors are configured by the programmed instructions to determine a second category pertaining to the target taxonomy associated with each of the plurality of normalized item descriptions pertaining to each of the plurality purchase orders by selecting one of, i) a local guided categorizer and ii) a global guided categorizer based on the categorizer selection flag. Furthermore, the one or more hardware processors are configured by the programmed instructions to determine a final category associated with the target taxonomy for each of the plurality of item descriptions pertaining to each of the plurality purchase orders based on a comparison between the first category and the second category and a dynamic threshold value using a final guided categorizer model. Finally, the one or more hardware processors are configured by the programmed instructions to group the plurality of item descriptions pertaining to each of the plurality purchase orders based on an associated final category and the computed plurality of vector embeddings using a grouping technique, wherein the grouped plurality of item descriptions pertaining to each of the plurality purchase orders are updated in a training dataset pertaining to the local guided categorizer.

In yet another aspect, there are provided one or more non-transitory machine-readable information storage mediums comprising one or more instructions which when executed by one or more hardware processors cause: receiving a plurality of purchase orders associated with an organization, wherein each of the plurality of purchase order comprises a plurality of item descriptions, item quantity, unit of measurement, item amount, purchase order plant name and purchase order vendor name.. Further, the one or more non-transitory machine-readable information storage mediums comprising one or more instructions which when executed by one or more hardware processors cause generating a filtered purchase order detail for each of the plurality of purchase orders associated with the organization by performing (i) conditional filtering and (ii) cleaning, wherein cleaning comprises datatype conversion, removing null values and filling missing values. Furthermore, the computer readable program, when executed on a computing device, causes the computing device to normalize each of the plurality of item descriptions associated with each of a plurality of filtered purchase order details by expanding a plurality of acronyms based on a predefined acronym dictionary using a large language model. Further, the one or more non-transitory machine-readable information storage mediums comprising one or more instructions which when executed by one or more hardware processors cause Furtherone or more non-transitory machine-information storage mediums comprising one or more instructions whichby one or more hardware processors causeFurthermore, the computer readable program, when executed on a computing device, causes the computing device to generatinge a first category pertaining to a target taxonomy associated with each of the normalized plurality of item descriptions pertaining to each of the plurality purchase orders by: (i) computing a vector embedding for each of the normalized plurality of item descriptions pertaining to each of the plurality purchase orders using a hidden layer of a pre-trained and fine-tuned Language Model and (ii) comparing each of a computed plurality of vector embedding with a plurality of predefined multi-level categories pertaining to the target taxonomy embeddings based on associated cosine similarity score to identify the first category pertaining to the target taxonomy, wherein a category associated with each of the computed plurality of vector embedding with highest cosine similarity score from among a plurality of categories is selected as the first category pertaining to the target taxonomy. Further, the one or more non-transitory machine-readable information storage mediums comprising one or more instructions which when executed by one or more hardware processors cause determining a categorizer selection flag for the plurality of purchase orders using a dynamic categorizer selection technique. Furthermore, the computer readable program, when executed on a computing device, causes the computing device to determine a second category pertaining to the target taxonomy associated with each of the plurality of normalized item descriptions pertaining to each of the plurality purchase orders by selecting one of, i) a local guided categorizer and ii) a global guided categorizer based on the categorizer selection flag.. Further, the one or more non-transitory machine-readable information storage mediums comprising one or more instructions which when executed by one or more hardware processors cause determining a final category associated with the target taxonomy for each of the plurality of item descriptions pertaining to each of the plurality purchase orders based on a comparison between the first category and the second category and a dynamic threshold value using a final guided categorizer model. Finally, the one or more non-transitory machine-readable information storage mediums comprising one or more instructions which when executed by one or more hardware processors cause grouping the plurality of item descriptions pertaining to each of the plurality purchase orders based on an associated final category and the computed plurality of vector embeddings using a grouping technique, wherein the grouped plurality of item descriptions pertaining to each of the plurality purchase orders are updated in a training dataset pertaining to the local guided categorizer.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a functional block diagram of a system for purchase order categorization using ensemble algorithm, in accordance with some embodiments of the present disclosure.
FIGS. 2A and 2B illustrate a flow diagram for a processor implemented method for purchase order categorization using ensemble algorithm, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional material categorization includes only basic levels like unique material codes, material groups and many times it is free form text which is leading to inconsistencies across plants and geographies. Some conventional methods utilize only item description, however, fail to provide accurate classification. Some other conventional approaches use a rule-based system which requires continuous updates.

To overcome the challenges of the conventional approaches, embodiments herein provide a method and system for purchase order categorization using ensemble algorithm. The present disclosure presents combines various latest technologies (such as Dynamic selection using Algorithm of Algorithms, Generative AI, Neural Networks-NLP, Semantic Similarity) with functional knowledge about the Purchase Order Categorization to provide a unique solution.

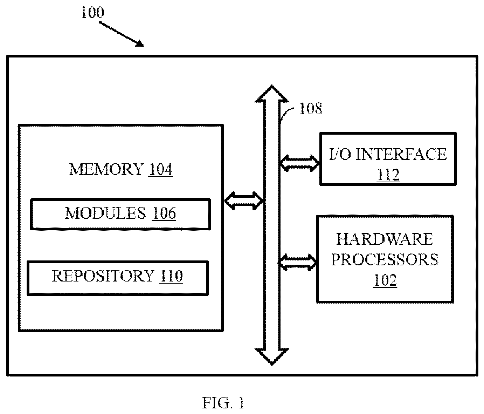

Referring now to the drawings, more particularly to FIG. 1 through FIG. 2B, where similar reference characters denote corresponding features consistently throughout the figures, there are shown preferred embodiments, and these embodiments are described in the context of the following exemplary system and/or method.

FIG. 1 is a functional block diagram of system 100 for purchase order categorization using ensemble algorithm, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and Dynamic Random Access Memory (DRAM), and/or nonvolatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Purchase order categorization using ensemble algorithm. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Purchase order categorization using ensemble algorithm.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS).

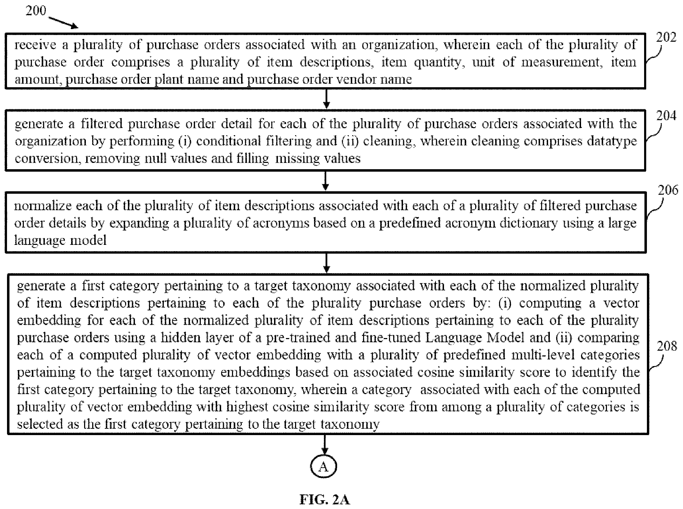

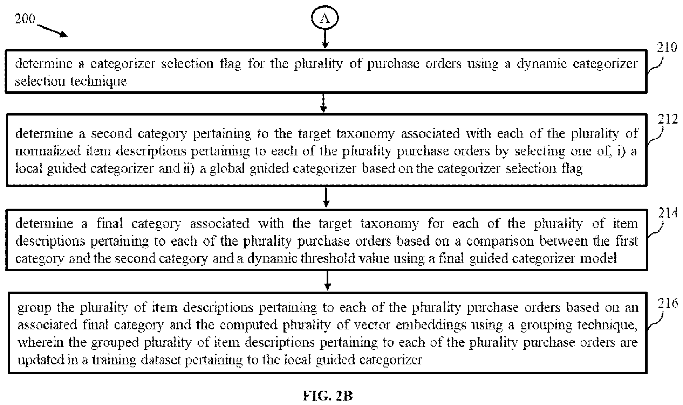

The working of the components of system 100 are explained with reference to the method steps depicted in FIGS. 2A and 2B.

FIGS. 2A and 2B (collectively referred to as FIGS. 2A and 2B) is an exemplary flow diagram illustrating a method 200 for purchase order categorization using ensemble algorithm implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1 and the steps of flow diagram as depicted in FIGS. 2A and 2B. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which steps of the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIGS. 2A and 2B, at step 202 of method 200, one or more hardware processors 102 are configured by the programmed instructions to receive a plurality of purchase orders associated with an organization. Each of the plurality of purchase order includes a plurality of item descriptions, item quantity, unit of measurement, item amount, purchase order plant name and purchase order vendor name.

At step 204 of the method 200, the one or more hardware processors 102 are configured by the programmed instructions to generate a filtered purchase order detail for each of the plurality of purchase orders associated with the organization by performing (i) conditional filtering and (ii) cleaning. For example, the cleaning process includes datatype conversion, removing null values and filling missing values. Similarly, the conditional filtering includes selecting any row/column of interest from huge tabular data.

At step 206 of the method 200, the one or more hardware processors 102 are configured by the programmed instructions to normalize each of the plurality of item descriptions associated with each of a plurality of filtered purchase order details by expanding a plurality of acronyms based on a predefined acronym dictionary using a large language model.

For example, the item description in the purchase order data varies a lot in text description and has many acronyms and industry specific jargon in it. For example, considering the item description, "DOOR ACC GATE HOOK ROD DIA 5MMX150MM LNG ". This needs to be normalized into more understandable and coherent language so that a language model (a neural network-based AI model) can understand it well. Further, normalization is required for the accurate categorization of the purchase order. For example, similar items/purchase orders should be categorized into one group. This normalization module refers to various acronyms and substitutes them in the item description. This makes the description more meaningful in semantic terms and increases the accuracy of categorization. For example; "ms" is replaced with mild steel and "ss" is replaced with stainless steel.

Further, Generative Artificial Intelligence (Gen AI) is used to normalize the description. The present disclosure utilized pretrained GPT4 model via Azure Open AI API to pass the input item description and get back the normalized version. Further, prompt engineering is done to get the right output from the model. For example, an item description "2 5 TO 3 REDUCER UPVC SCH 40" is replaced with "Pipe Reducer - Unplasticized Polyvinyl Chloride (UPVC) - Size Reduction - Size: 2.5 inch to 3 inch, Schedule: 40 - N/A".

At step 208 of the method 200, the one or more hardware processors 102 are configured by the programmed instructions to generate a first categorization pertaining to the target taxonomy associated with each of the normalized plurality of item descriptions pertaining to each of the plurality purchase orders. The steps for generating the first categorization pertaining to the target taxonomy is described as follows: Initially, a vector embedding is computed for each of the normalized plurality of item descriptions pertaining to each of the plurality purchase orders using a hidden layer of a pre-trained and fine-tuned Language Model. Further, a computed plurality of vector embeddings are compared with a plurality of predefined multi-level categories of the target taxonomy embeddings based on associated cosine similarity score to identify the first category within the taxonomy for each of the normalized plurality of item descriptions pertaining to each of the plurality purchase orders. A category pertaining to the target taxonomy associated with the vector embedding with highest cosine similarity score among the plurality of taxonomy embeddings is selected as the first category from the target taxonomy.

United Nations Standard Products and Services Code^{®} (UNSPSC^{®}) is one example of such taxonomy. It is a hierarchical taxonomy with following levels shown in Table I. For example, the taxonomy row /category/bucket from UNSPSC " Vehicle interior die cut electrical and shielding component " is converted to vector and stored. The vector looks like [-0.034, -0.071, 0.28, ..., -0.059, 0.0025]. This vector has a dimension (size) of 768.

**Table I**

| **Category Level 1** | **Category Level 2** | **Category Level 3 Code** | **Category Level 4 Code** |
|---|---|---|---|
| Segment Title | Family Title | Class | Commodity |

At step 210 of the method 200, the one or more hardware processors 102 are configured by the programmed instructions to determine a categorizer selection flag for the plurality of purchase orders. The dynamic categorizer selection technique/model is initially trained using a plurality of training purchase order details, progressive accuracy readings and data volume percentage of available training data.

For example, the steps for determining categorizer selection for the plurality of purchase orders using the dynamic categorizer selection technique/model is explained as follows: Initially, an input data comprising normalized plurality of item descriptions, item quantity, unit of measurement, line-item net amount base currency, purchase order plant name and purchase order vendor name is received. Further, a local categorizer model and a global categorizer model are executed simultaneously based on the input data. The local categorizer model is iteratively trained on a labelled dataset associated with an organization and the global categorizer model is trained on labelled datasets pertaining to a plurality of organizations. Further, an accuracy value associated with the local categorizer models and the global categorizer model is computed. The accuracy is computed based on number of records correctly categorized divided a total number of records being categorized. Post determining the accuracy, the categorizer flag of the associated categorizer is set to one if the accuracy is greater than the dynamic threshold. The dynamic categorizer selection is repeated per batch of input labelled data volume increase leading to progressive accuracy calculations.

For example, the dataset to train a guided categorizer (local and global) is created by correcting output of zero-shot categorizer. The first type of categorizer is text-only based categorizer, where using Item Description, the line item is categorized. Here, Statistical machine learning models, deep learning based dense neural networks, sequential models, pre-trained transformer models are trained/fine-tuned. Each type of algorithm is trained 50 times for hyperparameter tuning using hyperopt. This means, around 500 different categorizers on the corrected dataset are executed and the best categorizer is selected. Best model of each algorithm is then ensembled using a stacking ensemble model, which is also hyperparameter tuned using hyperopt - generating 50 more models. Best model means the highest F1-score on validation dataset. Best of non-ensembled and ensembled model is then selected as the best text-only based categorizer. Best model means the highest F1-score on validation dataset.

At step 212 of the method 200, the one or more hardware processors 102 are configured by the programmed instructions to determine a second category pertaining to the target taxonomy associated with each of the plurality of normalized item descriptions pertaining to each of the plurality purchase orders by selecting one of, i) a local guided categorizer and ii) a global guided categorizer based on the categorizer selection flag. Table II illustrates a first and second category associated with the target taxonomy.

**Table II**

| Item Description | First Category ( Based on Cosine similarity embeddings) | Second Category as per Guided ( Local/Global) |
|---|---|---|
| BEARING SPH ROLLER 22218 C 90X160X40 | Spherical bearings | Roller Bearings |

The second categorizer is hybrid categorizer, which uses Item Description as well as some structured meta information about the item including quantity, vendor, unit price, etc. to categorize the item. Even here, DL based dense neural networks, sequential models, and pre-trained transformer models are trained/fine-tuned and used. The difference is with unstructured text input, structured input is also used for training the model. Each of a plurality of algorithms is trained 50 times for hyperparameter tuning using hyperopt. Further, the best model/algorithm is selected from the plurality of algorithms. A model/algorithm with the highest F1-score on validation dataset is identified as the best model. Finally, the best text-only categorizer and hybrid categorizer is chosen as the final guided categorizer model.

At step 214 of the method 200, the one or more hardware processors 102 are configured by the programmed instructions to determine a final category pertaining to the target taxonomy associated with each of the plurality of item descriptions pertaining to each of the plurality purchase orders based on a comparison between the first category, the second category and a dynamic threshold value using the final guided categorizer model.

For example, if the confidence score of the input record (purchase orders), as predicted by the final guided categorizer model is less than the dynamic threshold, the first category (via unguided cosine similarity) is selected as final category. Else if the confidence score of the input record is above the dynamic threshold value, then the second category (via local or global guided categorizer) is selected as final category.

The local and the global guided categorizers utilizes the values from a target multi-level taxonomy as the target categories. Whenever an input record is mapped to the target category by the categorizer, it also generates a confidence score for that class (between 0 to 1). Further, iterative runs are performed and, in each run, the following metrics are computed.

The dynamic threshold value is determined using two metrics: (i) F1-score of the data points that are above each confidence score cut off value and (ii) the number of correct data points that are above each confidence score cut off value. Correct data points means the data points or input records that are mapped to the right category. For each confidence score cut off value, F1-score of the data points that are above the confidence score cut off and the number of correct data points that are above the confidence score cut off are computed.

Further, for each confidence score cut off value, the harmonic mean of the two metrics (F1-score and the number of correct data points above the cut-off) is computed. Further, an optimal cut off value that results in the highest harmonic mean of the two metrics is identified. The cut off value with the highest harmonic mean is chosen as the dynamic threshold. For example, the following runs (shown in Table III) are done with multiple confidence score threshold values. And based on above logic finally the row third from the last is selected and the identified dynamic threshold is 0.7.

**Table III**

| **Confidence Score Cut off value** | **F1-Score** | **Number of Correct Predictions (Normalized)** | **Harmonic Mean** |
|---|---|---|---|
| 0 | 0.8643 | 1 | 0.8965 |
| 0.1 | 0.8659 | 0.9997 | 0.8977 |
| 0.2 | 0.8689 | 0.9976 | 0.8996 |
| 0.3 | 0.8727 | 0.9937 | 0.9018 |
| 0.4 | 0.8771 | 0.9881 | 0.904 |
| 0.5 | 0.8828 | 0.9803 | 0.9067 |
| 0.6 | 0.8889 | 0.9686 | 0.9087 |
| **0.7** | **0.8955** | **0.9531** | **0.9101** |
| 0.8 | 0.9023 | 0.9308 | 0.9097 |
| 0.9 | 0.9159 | 0.8885 | 0.9085 |

At step 216 of the method 200, the one or more hardware processors 102 are configured by the programmed instructions to group the plurality of item descriptions pertaining to each of the plurality purchase orders based on an associated final category pertaining to the target taxonomy and vector embeddings using a grouping technique, wherein the grouped plurality of item descriptions pertaining to each of the plurality purchase orders are updated in training dataset pertaining to a local categorizer model. Table IV illustrates a categorized input purchase order into the right category taxonomy bucket.

**Table IV**

| **Item descri ption** | **Quan tity** | **Unit of measure ment** | **Item amount** | **Purc hase vendor order name** | **Predicted UNSPSC segment** | **Predicted UNSPSC family** | **Predicted UNSPSC class** | **Predicted UNSPSC commodity** |
|---|---|---|---|---|---|---|---|---|
| PIPE 20 IN X 36 CI 329 | 2 | Each | 1305 00 | ABC | Distributi on and Conditio ning systems, equipme nts and compone nts | Pipe piping and pipe fitting | Indust rial pipe and piping | Industrial cast iron pipe |
| BEARI NG BALL 60127 60X95 X18 | - | Each | - | XYZ | Manufact uring compone nts and supplies | Bearin gs and bushi ngs, wheel s and gears | Bearings | Ball bearings |

Use Case 1: Increase in Spend Visibility Challenge: A multinational chemical company struggled with limited visibility into their procurement spend across multiple plants and regions, leading to inefficient budgeting and procurement decisions. The present disclosure is used to classify spend at 4 levels as per UNSPSC Categorization allowed the company to visualize and analyze spend data from various sources, providing a comprehensive view of procurement. Hence, the procurement team gained real-time insights into spend patterns, enabling more informed decision-making, improved budget allocation, and the identification of cost-saving opportunities.

Use Case 2: Identifying common items to increase procurement synergy across geographic locations. A multi-national corporation faced difficulties in managing and standardizing items/materials across different plants and locations, resulting in duplicated efforts and higher procurement costs. The present disclosure is used to classify spend at 4 levels as per UNSPSC Categorization enabled the identification and harmonization of common materials/items, ensuring consistency across all locations. Hence, standardization of materials led to streamlined procurement processes, reduced redundancies, and significant cost savings due to bulk purchasing and better supplier negotiations.

Use Case 3: Spend Consolidation Across Different Purchasing Groups with Common Categories. An enterprise with multiple purchasing groups found it challenging to consolidate spend data, missing out on potential volume discounts and optimized supplier relationships. The present disclosure enabled by organization to aggregate and categorize spend data across various purchasing groups, identifying common categories for consolidation. Hence, the company achieved greater negotiating power with suppliers, leading to volume discounts and more strategic supplier partnerships, ultimately reducing procurement costs and improving efficiency.

Use Case 4: Identification of Tail Spend Categories and Deciding on Consolidation Strategies. A large organization struggled to manage tail spend, which often went unnoticed and unmanaged, leading to inefficiencies and missed savings opportunities. The present disclosure identified tail spend categories and provided actionable insights for consolidation strategies, helping the procurement team focus on these overlooked areas. Hence, by consolidating tail spend categories, the organization reduced maverick spending, achieved better control over procurement processes, and realized significant cost savings through strategic sourcing and supplier management.

**Experimentation:** Initially the runs included a small number of records. The dynamically selected method included cosine similarity based local categorizer model and global categorizer model, as the training labelled records were low in number. Hence the accuracy was relatively low as well. As the number of labelled records for training increased and multiple iterative runs were completed, the dynamic selector flag was set to the local model and the accuracy progressively increased, as shown by the results given in Table V.

**Table V**

| **#** | **Month** | **Total Records Categorized** | **Held Out Set ( Validation Set No of records)** | **% Accuracy ( Calculated on held out validation set)** | **Method Selected** |
|---|---|---|---|---|---|
| 1 | Dec-22 | 2000 | 773 | 39% | Unguided + Guided Global Model |
| 2 | Feb-23 | 5000 | 850 | 48% | Unguided + Guided Global Model |
| 3 | Apr-23 | 9289 | 678 | 41% | Unguided + Guided Global Model |
| 4 | Jun-23 | 19501 | 450 | 61% | Unguided + Guided Global Model |
| 5 | Aug-23 | 28752 | 650 | 66% | Unguided + Guided Global Model |
| 6 | Oct-23 | 41207 | 580 | 71% | Unguided + Guided Global Model |
| 7 | Nov-23 | 56773 | 723 | 90% | Unguided + Guided Local Model |
| 8 | Dec-23 | 92368 | 1197 | 74% | Unguided + Guided Local Model |
| 9 | Feb-24 | 143859 | 372 | 92% | Unguided + Guided Local Model |
| 10 | Mar-24 | 191346 | 2769 | 88% | Unguided + Guided Local Model |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of purchase order categorization using ensemble algorithm. The present disclosure considers not only considers item description for classification but also includes a plurality of other data associated with the purchase order. Further, the present disclosure includes a dynamic threshold and a dynamic categorizer selection module which provides technical advancement.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), by one or more hardware processors, a plurality of purchase orders associated with an organization, wherein each of the plurality of purchase order comprises a plurality of item descriptions, item quantity, unit of measurement, item amount, purchase order plant name and purchase order vendor name;
generating (204), by the one or more hardware processors, a filtered purchase order detail for each of the plurality of purchase orders associated with the organization by performing (i) conditional filtering and (ii) cleaning, wherein cleaning comprises datatype conversion, removing null values and filling missing values;
normalizing (206), by the one or more hardware processors, each of the plurality of item descriptions associated with each of a plurality of filtered purchase order details by expanding a plurality of acronyms based on a predefined acronym dictionary using a large language model;
generating (208), by the one or more hardware processors, a first category pertaining to a target taxonomy associated with each of the normalized plurality of item descriptions pertaining to each of the plurality purchase orders by:
computing a vector embedding for each of the normalized plurality of item descriptions pertaining to each of the plurality purchase orders using a hidden layer of a pre-trained and fine-tuned Language Model; and
comparing each of a computed plurality of vector embedding with a plurality of predefined multi-level categories pertaining to the target taxonomy embeddings based on associated cosine similarity score to identify the first category pertaining to the target taxonomy, wherein a category associated with each of the computed plurality of vector embedding with highest cosine similarity score from among a plurality of categories is selected as the first category pertaining to the target taxonomy;
determining (210), by the one or more hardware processors, a categorizer selection flag for the plurality of purchase orders using a dynamic categorizer selection technique;
determining (212), by the one or more hardware processors, a second category pertaining to the target taxonomy associated with each of the plurality of normalized item descriptions pertaining to each of the plurality purchase orders by selecting one of, i) a local guided categorizer and ii) a global guided categorizer based on the categorizer selection flag;
determining (214), by the one or more hardware processors, a final category associated with the target taxonomy for each of the plurality of item descriptions pertaining to each of the plurality purchase orders based on a comparison between the first category and the second category and a dynamic threshold value using a final guided categorizer model; and
grouping (216), by the one or more hardware processors, the plurality of item descriptions pertaining to each of the plurality purchase orders based on an associated final category and the computed plurality of vector embeddings using a grouping technique, wherein the grouped plurality of item descriptions pertaining to each of the plurality purchase orders are updated in a training dataset pertaining to the local guided categorizer.

2. The processor-implemented method as claimed in claim 1, wherein the dynamic threshold value is determined by computing a highest harmonic mean between F1-score of a plurality of data points above a predefined threshold value on a held-out validation dataset and a plurality of correct data points above the predefined threshold value on the held-out validation dataset.

3. The processor-implemented method as claimed in claim 1, wherein if a confidence score of the plurality of purchase orders predicted by the final guided categorizer model is less than the dynamic threshold, the first category is selected as final category and, wherein if the confidence score of the plurality of purchase orders is above the dynamic threshold, the second category is selected as final category.

4. The processor-implemented method as claimed in claim 1, wherein steps for determining categorizer selection flag using the dynamic categorizer selection technique comprises:
receiving an input data, wherein the input data comprises normalized plurality of item descriptions, item quantity, unit of measurement, line-item net amount base currency, purchase order plant name and purchase order vendor name;
simultaneously executing a local categorizer model and a global categorizer model based on the received input data, wherein the local categorizer model is iteratively trained on a labelled dataset associated with an organization and, wherein the global categorizer model is trained on labelled datasets pertaining to a plurality of organizations;
obtaining an accuracy value associated with the local categorizer models and the global categorizer model, wherein the accuracy is computed based on number of records correctly categorized and a total number of records being categorized; and
set the categorizer flag of the associated categorizer to one if the accuracy is greater than the dynamic threshold, wherein the dynamic categorizer selection is repeated per batch of input labelled data volume increase leading to progressive accuracy calculations.

5. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a plurality of purchase orders associated with an organization, wherein each of the plurality of purchase order comprises a plurality of item descriptions, item quantity, unit of measurement, item amount, purchase order plant name and purchase order vendor name;
generate a filtered purchase order detail for each of the plurality of purchase orders associated with the organization by performing (i) conditional filtering and (ii) cleaning, wherein cleaning comprises datatype conversion, removing null values and filling missing values;
normalize each of the plurality of item descriptions associated with each of a plurality of filtered purchase order details by expanding a plurality of acronyms based on a predefined acronym dictionary using a large language model;
generate a first category pertaining to a target taxonomy associated with each of the normalized plurality of item descriptions pertaining to each of the plurality purchase orders by:
computing a vector embedding for each of the normalized plurality of item descriptions pertaining to each of the plurality purchase orders using a hidden layer of a pre-trained and fine-tuned Language Model; and
comparing each of a computed plurality of vector embedding with a plurality of predefined multi-level categories pertaining to the target taxonomy embeddings based on associated cosine similarity score to identify the first category pertaining to the target taxonomy, wherein a category associated with each of the computed plurality of vector embedding with highest cosine similarity score from among a plurality of categories is selected as the first category pertaining to the target taxonomy;
determine a categorizer selection flag for the plurality of purchase orders using a dynamic categorizer selection technique;
determine a second category pertaining to the target taxonomy associated with each of the plurality of normalized item descriptions pertaining to each of the plurality purchase orders by selecting one of, i) a local guided categorizer and ii) a global guided categorizer based on the categorizer selection flag;
determine a final category associated with the target taxonomy for each of the plurality of item descriptions pertaining to each of the plurality purchase orders based on a comparison between the first category and the second category and a dynamic threshold value using a final guided categorizer model; and
group the plurality of item descriptions pertaining to each of the plurality purchase orders based on an associated final category and the computed plurality of vector embeddings using a grouping technique, wherein the grouped plurality of item descriptions pertaining to each of the plurality purchase orders are updated in a training dataset pertaining to the local guided categorizer.

6. The system as claimed in claim 5, wherein the dynamic threshold value is determined by computing a highest harmonic mean between F1-score of a plurality of data points above a predefined threshold value on a held-out validation dataset and a plurality of correct data points above the predefined threshold value on the held-out validation dataset.

7. The system as claimed in claim 5, wherein if a confidence score of the plurality of purchase orders predicted by the final guided categorizer model is less than the dynamic threshold, the first category is selected as final category and, wherein if the confidence score of the plurality of purchase orders is above the dynamic threshold, the second category is selected as final category.

8. The system as claimed in claim 5, wherein steps for determining categorizer selection flag using the dynamic categorizer selection technique comprises:
receiving an input data, wherein the input data comprises normalized plurality of item descriptions, item quantity, unit of measurement, line-item net amount base currency, purchase order plant name and purchase order vendor name;
simultaneously executing a local categorizer model and a global categorizer model based on the received input data, wherein the local categorizer model is iteratively trained on a labelled dataset associated with an organization and, wherein the global categorizer model is trained on labelled datasets pertaining to a plurality of organizations;
obtaining an accuracy value associated with the local categorizer models and the global categorizer model, wherein the accuracy is computed based on number of records correctly categorized and a total number of records being categorized; and
set the categorizer flag of the associated categorizer to one if the accuracy is greater than the dynamic threshold, wherein the dynamic categorizer selection is repeated per batch of input labelled data volume increase leading to progressive accuracy calculations.

9. One or more non-transitory machine-readable information storage mediums comprising one or more instructions which when executed by one or more hardware processors cause:
receiving a plurality of purchase orders associated with an organization, wherein each of the plurality of purchase order comprises a plurality of item descriptions, item quantity, unit of measurement, item amount, purchase order plant name and purchase order vendor name;
generating a filtered purchase order detail for each of the plurality of purchase orders associated with the organization by performing (i) conditional filtering and (ii) cleaning, wherein cleaning comprises datatype conversion, removing null values and filling missing values;
normalizing each of the plurality of item descriptions associated with each of a plurality of filtered purchase order details by expanding a plurality of acronyms based on a predefined acronym dictionary using a large language model;
generating a first category pertaining to a target taxonomy associated with each of the normalized plurality of item descriptions pertaining to each of the plurality purchase orders by:
computing a vector embedding for each of the normalized plurality of item descriptions pertaining to each of the plurality purchase orders using a hidden layer of a pre-trained and fine-tuned Language Model; and
comparing each of a computed plurality of vector embedding with a plurality of predefined multi-level categories pertaining to the target taxonomy embeddings based on associated cosine similarity score to identify the first category pertaining to the target taxonomy, wherein a category associated with each of the computed plurality of vector embedding with highest cosine similarity score from among a plurality of categories is selected as the first category pertaining to the target taxonomy;
determining a categorizer selection flag for the plurality of purchase orders using a dynamic categorizer selection technique;
determining a second category pertaining to the target taxonomy associated with each of the plurality of normalized item descriptions pertaining to each of the plurality purchase orders by selecting one of, i) a local guided categorizer and ii) a global guided categorizer based on the categorizer selection flag;
determining a final category associated with the target taxonomy for each of the plurality of item descriptions pertaining to each of the plurality purchase orders based on a comparison between the first category and the second category and a dynamic threshold value using a final guided categorizer model; and
grouping the plurality of item descriptions pertaining to each of the plurality purchase orders based on an associated final category and the computed plurality of vector embeddings using a grouping technique, wherein the grouped plurality of item descriptions pertaining to each of the plurality purchase orders are updated in a training dataset pertaining to the local guided categorizer.

10. The one or more non-transitory machine readable information storage mediums as claimed in claim 9, wherein the dynamic threshold value is determined by computing a highest harmonic mean between F1-score of a plurality of data points above a predefined threshold value on a held-out validation dataset and a plurality of correct data points above the predefined threshold value on the held-out validation dataset.

11. The one or more non-transitory machine readable information storage mediums as claimed in claim 9, wherein if a confidence score of the plurality of purchase orders predicted by the final guided categorizer model is less than the dynamic threshold, the first category is selected as final category and, wherein if the confidence score of the plurality of purchase orders is above the dynamic threshold, the second category is selected as final category.

12. The one or more non-transitory machine readable information storage mediums as claimed in claim 9, wherein steps for determining categorizer selection flag using the dynamic categorizer selection technique comprises:
receiving an input data, wherein the input data comprises normalized plurality of item descriptions, item quantity, unit of measurement, line-item net amount base currency, purchase order plant name and purchase order vendor name;
simultaneously executing a local categorizer model and a global categorizer model based on the received input data, wherein the local categorizer model is iteratively trained on a labelled dataset associated with an organization and, wherein the global categorizer model is trained on labelled datasets pertaining to a plurality of organizations;
obtaining an accuracy value associated with the local categorizer models and the global categorizer model, wherein the accuracy is computed based on number of records correctly categorized and a total number of records being categorized; and
set the categorizer flag of the associated categorizer to one if the accuracy is greater than the dynamic threshold, wherein the dynamic categorizer selection is repeated per batch of input labelled data volume increase leading to progressive accuracy calculations.
